Europäisches Patentamt

European Patent Office

Office européen des brevets

(11) Publication number: **0 292 450**
**A2**

(12) **EUROPEAN PATENT APPLICATION**

(21) Application number: **88850152.5**

(22) Date of filing: **03.05.88**

(51) Int. Cl.4: **B 64 F 1/02**

(30) Priority: **15.05.87 SE 8701995**

(43) Date of publication of application:
**23.11.88 Bulletin 88/47**

(84) Designated Contracting States:
**DE ES FR GB IT SE**

(71) Applicant: **VÄDERSTADVERKEN AB**
**C/o F A M T E C Box 7574**
**S-10393 Stockholm (SE)**

(72) Inventor: **Caap, Stig**
**c/o Scama AB Box 300**
**S-590 21 Väderstad (SE)**

(54) **Arrangement for an arrester device.**

(57) An arrangement for use in conjunction with aircraft arrester devices of the kind which comprise upper and lower, essentially horizontal edge elements (1 and 2), which edge elements are connected together by essentially vertical transverse elements (3) by means of coupling devices (5), for the purpose of protecting the transverse elements against the absorption of moisture, with an associated weight increase and rigidity at sub-zero temperatures.

Each transverse element (3) is enclosed by a hose- or stocking-like protective sleeve (7), which on the one hand is so arranged as to interact in a sealing fashion at its ends with adjacent parts of the arrester device in such a way that water and moisture are prevented from finding their way into the element, and on the other hand is executed from a semi-permeable material of a kind, such as GoreTex®, which is impermeable to water, but allows water vapour to pass through, so that any moisture which, in spite of every precaution, has managed to be absorbed by the transverse element (3), can evaporate into the surroundings.

Bundesdruckerei Berlin

## Description

## ARRANGEMENT FOR AN ARRESTER DEVICE

The present invention relates to an arrangement for aircraft arrester devices of the kind which comprise upper and lower, essentially horizontal edge elements which are connected together by essentially vertical transverse elements by means of coupling devices, for the purpose of protecting in the first place the transverse elements against the absorption of moisture.

Arrester devices for aircraft are stretched across the end of an aircraft runway on an airfield in order to arrest any aircraft which are unable to brake to a halt on the runway. The arrester devices are thus exposed to the weather and wind in the form of moisture, precipitation and changes in temperature. The edge elements and transverse elements are usually made of tapes or wires, arranged in bunches, preferably of a synthetic material.

The arrester devices generally lie at rest on the ground, and are raised when the need arises. As a consequence of their exposure to varying weather conditions, the edge elements and the transverse elements can absorb water in a quantity which can increase the weight of the elements by 40-50%, representing an increase in weight of several hundred kilograms. Similarly, when the weather conditions are associated with a temperature which fluctuates around freezing point, the absorbed water freezes to form ice and makes the system stiff and rigid, making the system even more difficult to operate, and impairing its function. When the transverse elements freeze, what may happen is that the lower edge element will be lifted up above the ground as the arrester device is raised into the arresting position. As the aircraft is arrested, this means that the nose-wheel of the aircaft does not pass over the lower edge element, but that the nose-wheel is arrested by said element. This in turn is associated with a considerable risk of damage to the nose-wheel, in conjunction with which the actual arresting procedure takes place in a manner which was not intended.

Experiments have taken place into various ways of sealing primarily the transverse elements by enclosing them within a sleeve, in such a way that moisture does not penetrate into the inside of the transverse elements. Thus, experiments have been made which have involved enclosing the transverse elements within a tight stocking or hose of fully tight material, in conjunction with which the hose was clamped around the transverse element close to its ends, for example by means of a hose clip or in some other equivalent fashion. Such constructions have been found to be not entirely tight, however, and to function rather in a manner which is the opposite of what was intended. This is attributable to the fact that moist air is able to find its way in at the ends of the hose between the threads of the transverse element in conjunction with fluctuations in temperature and air pressure, whereupon that air condenses inside the hose. The water formed in this way is very difficult to evaporate, and the manner in which the arrangement functions in practice is for moisture and water to collect in the hose in increasing quantities.

The disadvantages associated with the previously disclosed designs referred to above are avoided in the invention, and an easily-handled and serviceable arrester device is obtained by every transverse element being enclosed by a hose- or stocking-like sleeve, which on the one hand is so arranged as to interact in a sealing fashion at the ends of the elements with adjacent parts of the device in such a way that water and moisture are prevented from finding their way into the tapes or threads of the element, and on the other hand is executed from a semi-permeable material of a kind, such as Gore-Tex®, which is impermeable to water, but allows water vapour to pass through, so that any moisture which, in spite of every precaution, has managed to be absorbed by the transverse element, can evaporate into the surroundings.

In one embodiment the ends of the protective cover interact in a sealing fashion with the transverse element itself at a point adjacent to the coupling devices which connect the transverse element and the edge element.

In a further embodiment the ends of the protective cover are sealingly connected to the coupling devices in such a way that the cover in this way encloses the transverse element in its entirety.

In a fourth embodiment the coupling device consists of a thimble-shaped device, through the opening of which the edge elements run, whilst the walls of the protective cover are connected in a sealing fashion with neck parts executed on the thimble device which surround the opening of the thimble-shaped part.

The invention is described below in relation to the accompanying drawing, in which:

Fig. 1 shows an arrester device viewed in the longitudinal sense of the landing strip;

Fig. 2 shows one embodiment of the invention;

Fig. 3 shows a partially sectioned view in accordance with the arrow III in Fig. 2;

Fig. 4 shows another embodiment of the invention; and

Fig. 5 shows the embodiment in accordance with Fig. 4 viewed in the direction indicated by the arrow V in Fig. 4, partially sectioned.

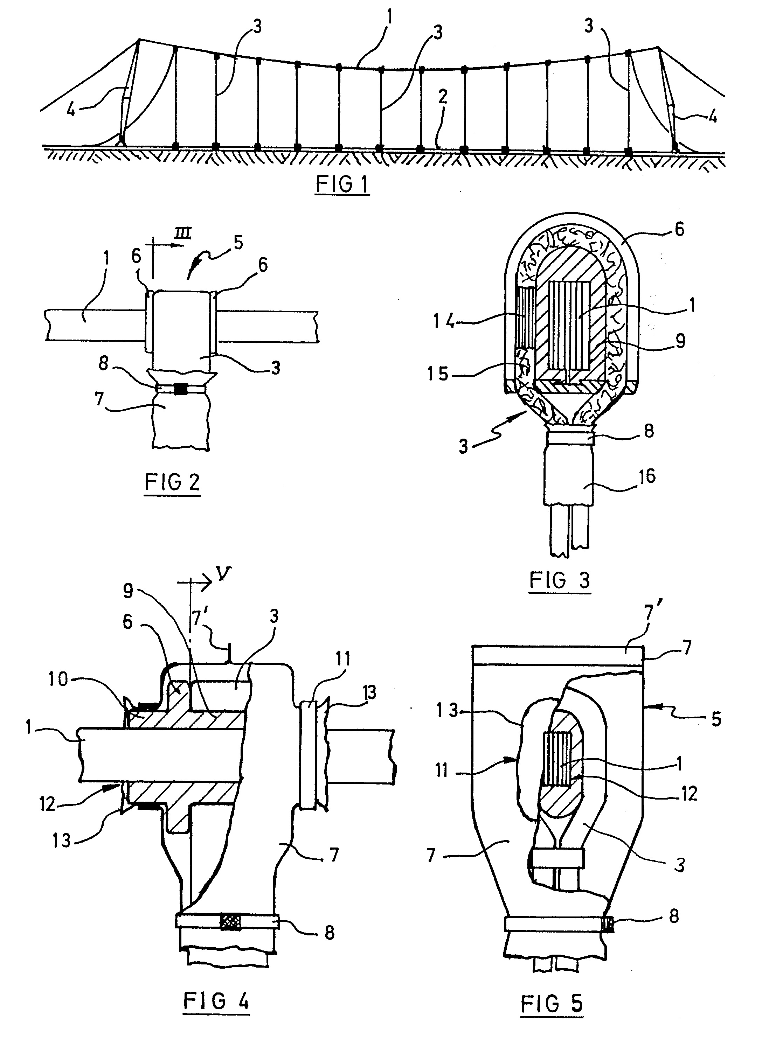

The designation 1 is used in Fig. 1 in respect of an upper horizontal edge element, and the designation 2 in respect of a lower horizontal edge element. Arranged between these edge elements are a number of essentially vertical transverse elements 3, which are connected at their ends to the edge elements. The lower edge element 2 rests on or is attached to the ground in a previously disclosed fashion, whilst the upper edge element 1 is similarly supported by posts 4, which can be raised into an upright position or folded down to the ground so that the whole of the arrester device is ineffective.

Fig. 2 shows in more detail the connection between an edge element 1 and a transverse element 2 by means of the coupling device 5. In the embodiment shown here the coupling device consists of a thimble- or bobbin-shaped device, which is provided with flanges 6. The upper edge element 1 runs through an opening in the coupling device 5, whilst the end of the transverse element 3, which has been executed as a ring, is fitted between the flanges 6. The transverse element 3 is enclosed by a stocking 7 made of semi-permeable material, that is to say a material which is impermeable to water on the outside, but which allows water vapour on the inside to pass through, in the manner outlined above. Arranged at the end of the stocking 7 is a clamp 8, which compresses the stocking 7 around the transverse element 3.

As described above, it is possible in the case of this design for water vapour to find its way in at the clamp 8. Unlike previously disclosed designs, however, water will not collect inside the stocking 7, but will evaporate outwards through the stocking thanks to the permeability exhibited by the stocking to water vapour.

Fig. 2 shows an upper connection of the transverse element 3 to the upper edge element 1. The connection of the transverse element 3 to the lower edge element 2 is made in a similar manner.

Fig. 3 shows a section through the connection of the transverse element to the edge element. The designations are the same as in Fig. 2.

Fig. 4 shows an improved embodiment of the invention, as a partially sectioned view. As in the embodiment in accordance with Fig. 2, the edge element 1 runs through the opening 12 in a flanged thimble-shaped device 9. The thimble-shaped device exhibits projecting necks 10 around the opening 12 on both sides. The semi-permeable stocking 7 is slotted, and the edges 13 of the slots have been pulled over the neck 10, where they are held forced against the latter in a sealing fashion by means of a clamp 11. At the top the sleeve is sealed by means of a flat, compressed joint 7', for example by adhesive bonding. This embodiment thus involves the whole of the transverse element 3 and the coupling device, that is to say the thimble-shaped device 9 (but not the outermost part of the neck 10), being enclosed by the sleeve 7. A design has thus been achieved in which water is unable to penetrate into the transverse element, yet in which any moisture is able to find its way out.

Fig. 5 shows a partially sectioned view in accordance with the arrow V in Fig. 4. The Figure shows how the sleeve 7 is forced over the neck 10 and is secured to same, whilst the upper edge element 1 is able to pass freely through the opening 12 of the coupling device 5 without affecting the connection of the coupling device to the transverse element.

Fig. 3 shows an embodiment of the invention, in which the transverse element consists of an endless loop 3 made up of a number of monofilament threads 14. Arranged around the loop is an endless or toroidal stocking 15 made of a semi-permeable material (GoreTex®, or similar), as described above. The loop is executed with rings around the thimble-shaped device 9. At the point where the transverse element 3 exits from the thimble-shaped device 9, between the flanges 6 of which the rings of the loop are positioned, the two parts of the loop are brought together and are enclosed within an external stocking 16. Arranged next to the thimble-shaped device 9 is a clamp 8, which compresses the external stocking 16, which can also be made of a semi-permeable material, around the two parts of the loop. In this way it is possible to obtain a double permeable layer between the actual threads of the transverse element and the surrounding environment. Further penetration of water into the threads is prevented in this way.

In order to protect the semi-permeable stockings, which are made of a quite thin material, it is appropriate to arrange a mechanical shield, such as a wear protector, on the outside of the stockings. This wear protector may appropriately be made of a material woven from textile or plastics fibres which exhibits total permeability to water and moisture.

Practical tests have shown that transverse elements executed in accordance with the invention can be immersed in water for several days, when only an insignificant increase in weight will be produced by the penetration of water. In order further to improve the sealing, the thimble-shaped device 9 may be executed from a rubber elastic material.

Two illustrative embodiments of the invention are described above, although it is obvious that an expert may arrive at other designs within the scope of the invention as it is described in the accompanying Patent Claims.

### Claims

1. Arrangement for use in conjunction with aircraft arrester devices of the kind which comprise upper and lower, essentially horizontal edge elements (1 and 2), which edge elements are connected together by essentially vertical transverse elements (3) by means of coupling devices (5), for the purpose of protecting the transverse elements against the absorption of moisture, with an associated weight increase and rigidity at sub-zero temperatures, **characterized** in that each transverse element (3) is enclosed by a hose- or stocking-like protective sleeve (7), which on the one hand is so arranged as to interact in a sealing fashion at its ends with adjacent parts of the arrester device in such a way that water and moisture are prevented from finding their way into the element, and on the other hand is executed from a semi-permeable material of a kind, such as GoreTex®, which is impermeable to water, but allows water vapour to pass through, so that any moisture which, in spite of every precaution, has managed to be absorbed by the transverse element (3), can evaporate into the surroundings.

2. Arrangement according to Claim 1, **characterized** in that the ends of the protective sleeve (7) interact in a sealing fashion with the transverse element (3) itself close to the coupling devices (5) which connect the transverse element (3) to the edge elements (1, 2).

3. Arrangement according to Claim 1, **characterized** in that the ends of the protective sleeve (7) interact in a sealing fashion with the coupling devices (5) in such a way that the sleeve in this way encloses the transverse element (3) in its entirety.

4. Arrangement according to Claims 2 or 3, **characterized** in that the coupling devices consist of a thimble-shaped or an annular device with transcurrent holes (12) for the edge elements (1, 2), and in that the ends of the transverse element (3) exhibit the form of rings fitted around the coupling devices (5).

5. Arrangement according to Claim 4, **characterized** in that the coupling device (5) exhibits two annular flanges (6) arranged perpendicularly to the transcurrent hole (12), between which flanges the transverse element (3) is fitted, as well as neck-shaped shoulders (10) arranged outside the flanges (6), to which the walls of the sleeve (7) are connected in a sealing fashion.

6. Arrangement according to any of the preceding Claims, **characterized** in that the connecting device (5, 9) consists of a rubber elastic material.

7. Arrangement according to Claim 1, **characterized** in that the transverse elements (3) consist of an endless loop of threads (14), around which is arranged an endless or toroidal stocking (15) made of a semi-permeable material, in conjunction with which rings are executed at the ends of the loop for the purpose of surrounding the thimble-shaped device (9) between the flanges (6) executed on the thimble-shaped device (9), with both parts of the ring which extend outwards from the thimble-shaped device (9) being enclosed within an external stocking (16) made of a semi-permeable material, and the ends of which are routed close to the thimble-shaped device (9), with a clamp (8) being arranged around the aforementioned two parts and the end of the external stocking (16) in order to force these together so as to produce a tight seal.

8. Arrangement according to any of the preceding Claims, **characterized** in that stockings of wear-resistant material which is permeable to moisture and water are arranged outside the semi-permeable stockings.

0292450

FIG 1

FIG 2

FIG 3

FIG 4

FIG 5